Europäisches Patentamt

European Patent Office

Office européen des brevets

(11) Publication number: **0 260 035**
**A1**

(12) **EUROPEAN PATENT APPLICATION**

(21) Application number: **87307602.0**

(22) Date of filing: **27.08.87**

(51) Int. Cl.⁴: **C08L 77/00** ,
//C08L51/04,C08L51/06

(30) Priority: **02.09.86 US 902732**

(43) Date of publication of application:
**16.03.88 Bulletin 88/11**

(84) Designated Contracting States:
**BE DE FR GB IT NL SE**

(71) Applicant: **THE DOW CHEMICAL COMPANY**
**2030 Dow Center Abbott Road P.O. Box 1967**
**Midland, MI 48640(US)**

(72) Inventor: **Chen, Bibiana S.Y.**
**2204 Dilloway Drive**
**Midland Michigan 48640(US)**
Inventor: **Henton, David E.**
**5409 Woodview Pass**
**Midland Michigan 48640(US)**

(74) Representative: **Burford, Anthony Frederick et al**
**W.H. Beck, Greener & Co. 7 Stone Buildings**
**Lincoln's Inn**
**London WC2A 3SZ(GB)**

(54) **Toughened polyamide compositions.**

(57) A rubber-modified polyamide composition is obtained by blending/reacting in one or more stages (1) a major proportion of a polyamide continuous phase with (2) a minor proportion (up to 45 percent) of a discontinuous phase comprising rubber substrate grafted to a superstrate formed of a monovinylidene monomer and one or more ethylenically unsaturated monomers. At least one of said ethylenically unsaturated monomers has a reactive glycidyl functionality which reacts with a functionality of the polyamide. Preferably, the discontinuous phase comprises styrene, glycidyl methacrylate and, optionally, acrylonitrile.

EP 0 260 035 A1

## TOUGHENED POLYAMIDE COMPOSITIONS

This invention relates to a rubber-modified polyamide composition. Specifically, it relates to a polyamide composition having functional groups, said polyamide composition having dispersed therein grafted rubber particles wherein the grafted rubber particles comprise a functionality capable of reacting with the functional groups of the polyamide.

Polyamide resins comprise a well-known class of engineering thermoplastics. Polyamides (also known as nylons) are polymers comprising recurring amide moieties in their main polymer chain. Polyamides generally comprise reactive amine and/or carboxyl moieties. Such polyamides are useful in a wide variety of applications such as molding applications where thermoplastic materials which exhibit good toughness are desired.

Unfortunately, polyamide compositions can exhibit an undesirable notch sensitivity. Attempts have been made to strengthen or reinforce polyamide compositions by incorporating therein a variety of elastomeric compositions. Examples of such modified thermoplastic molding compositions are disclosed in U.S. Patent Nos. 3,984,497; 4,338,406; 4,338,409; 4,410,661; and 4,584,344. Examples of other such polyamide compositions are disclosed in U.S. Patent Nos. 4,246,371; 4,174,358; and 4,320;213.

Unfortunately, typical polyamide compositions modified with elastomeric material do not exhibit uniform impact resistance and/or can exhibit a nonuniform dispersion of elastomeric material which leads to undesirable stability problems.

DE-A-3403576 discloses polyamide moulding compositions comprising 5 to 50 parts by volume of a partly crystalline polyamide, 95 to 50 parts by volume of an elastomeric, crosslinked emulsion polymer, and optional additives in effective amounts. The emulsion polymers can contain adhesion promoting moieties such as carboxyl, amide, anhydride and epoxy groups provided by incorporating 0.1 to 10 weight percent of (meth)acrylic and (meth)acrylamide or glycidyl acrylate monomers in the emulsion polymerization composition. Improved properties, including improved notched impact strength, are claimed for the composition generally but no examples are given of glycidyl acrylate-containing compositions and no specific claims made concerning the performance of glycidyl acrylate-containing compositions.

In view of the deficiencies of the prior art, it would be highly desirable to provide a polyamide composition which polyamide composition is modified by incorporating therein an elastomeric material, which modified polyamide composition is capable of good toughness, exhibits good notch sensitivity, and maintains good dispersion properties. It is to this goal that the present invention is directed.

The present invention concerns a polymeric composition comprising:

(a) a major proportion of a continuous phase comprising a polyamide composition, said polyamide composition comprising one or more reactive functionalities; and

(b) a minor proportion of a discontinuous phase dispersed in said continuous phase, said discontinuous phase comprising a graftable rubber substrate having grafted thereto a superstrate formed from a monovinylidene monomer and one or more ethylenically unsaturated monomers copolymerizable with the monovinylidene monomer wherein at least one of said ethylenically unsaturated monomers comprises a reactive glycidyl functionality capable of reacting with one or more of the reactive functionalities of the polyamide composition and said discontinuous phase is present in an amount of up to 45 percent by weight of the combined weight of continuous and discontinuous phases.

Additionally, the present invention concers a method of preparing the above described polymeric composition. The method comprising the steps of

(a) providing a continuous phase comprising a polyamide composition, said polyamide composition comprising one or more reactive functionalities;

(b) providing a discontinuous phase comprising a graftable rubber substrate, said graftable rubber substrate having grafted thereto a superstrate formed from a monovinylidene monomer and one or more ethylenically unsaturated monomers wherein at least one of said ethylenically unsaturated monomers comprises a reactive glycidyl functionality capable of reacting with one or more of the reactive functionalities of the polyamide composition; and

(c) dispersing said discontinuous phase in said continuous phase in an amount of up to 45 percent by weight of the combined weight of continuous and discontinuous phases.

The continuous phase of the polymeric composition of the present invention comprises a polyamide composition. Polyamide compositions suitable for use as the continuous phase of the present invention are well-known in the prior art. Such polyamide compositions are commonly referred to as nylons. Polyamides suitable for use in the present invention include those described in U.S. Patent Nos. 2,071,250; 2,071,251; 2,130,523; 2,130,948; 2,241,322; 2,312,966; 2,512,606; and 3,393,210.

Typical polyamide resins can be produced by condensation of equimolar amounts of a saturated dicarboxylic acid containing from 4 to 12 carbon atoms with a diamine, said dimaine containing from 4 to 14 carbon atoms. Polyamide compositions so produced contain both carboxyl and amine reactive functionalities. It is also possible to use mixtures of various dicarboxylic acids and various diamines when forming the polyamide resins of the present invention. Moreover, excess diamine or excess dicarboxylic acid can be employed in forming the polyamide composition to provide an excess of amine or carboxyl reactive functionalities in the resultant polyamide. Alternatively, polyamide resins can be produced by a direct amination reaction of amino acids containing from 2 to 15 carbon atoms or through ring opening reactions of lactams. Polyamide resins produced by direct amination of amino acids or ring opening of lactams contain amine functional end groups.

The polyamides may be either amorphous or crystalline. Exemplary of polyamide compositions desirable for use in the present invention are those formed through ring opening reactions of lactams, such as polycaprolactam (Nylon 6); polylaurolactam, polycapryllactam, etc.; and those formed through condensation of one or more dicarboxylic acids and one or more diamines, such as polyhexamethylene adipamide (nylon 66), polyhexamethylene azelamide (nylon 69), polyhexamethylene sebacamide (nylon 610), polyhexamethylene dodecanoamide (nylon 612), polyhexamethylene isophthalamide (nylon 6IA), and polyhexamethylene tere-co-isophthalamide (nylon 6TA/IA), and mixtures or interpolymers thereof.

Polyamide compositions preferred for use in the present invention are polycaprolactam (Nylon 6), and polyamides formed from an aliphatic diamine and an aliphatic or aromatic dicarboxylic acid, such as polyhexamethylene adipamide (nylon 66) and polyhexamethylene azelamide (nylon 69).

The discontinuous phase of the present invention comprises a graftable rubber substrate having grafted thereto a superstrate. Graftable rubber substrates suitable for use in the present invention may be formed from various elastomeric materials. The elastomeric materials suitable for use in the present invention include diene rubbers, ethylene propylene rubbers, ethylene propylene diene (EPDM) rubbers, acrylate rubbers, polyisoprene rubbers, halogen-containing rubbers, and mixtures thereof. Also suitable are interpolymers of rubber-forming monomers with other copolymerizable monomers.

The elastomeric materials preferred for use in the present invention are diene rubbers, mixtures of diene rubbers, acrylate rubbers, and EPDM rubbers. A diene rubber is any rubbery polymer of one or more conjugated 1,3-diene, e.g., butadiene, isoprene, piperylene, chloroprene, etc. An acrylate rubber is any rubbery polymer of one or more acrylate monomers e.g., 2-ethylhexyl acrylate, butylacrylate, etc. An EPDM rubber is an interpolymer formed from ethylene, propylene and one or more diene.

For the purposes of this invention a "rubber substrate" includes polymers having a glass transition temperature not higher than 0°C, preferably not higher than -20°C as determined by American Society of Testing and Materials (ASTM) test Method D 746-52T. Such rubbery polymers include homopolymers, block copolymers and interpolymers of conjugated 1,3-dienes and/or acrylate monomers with up to an equal amount by weight of one or more copolymerizable monoethylenically unsaturated monomers, such as monovinylidene aromatic hydrocarbons (e.g., styrene; a ring-substituted alkylstyrene, such as o-, m-, and p-vinyl toluene, 2,4-dimethylstyrene, the ring-substituted ethylstyrenes, p-tert-butylstyrene, etc.; an alpha-alkylstyrene, such as alpha-methylstyrene, alpha-ethylstyrene, alpha-methyl-p-methylstyrene, etc.; vinyl naphthalene, etc.); ring-substituted halo monovinylidene aromatic hydrocarbons (e.g., the o-, m-, and p-chlorostyrenes, 2,4-dibromostyrene, 2-methyl-4-chlorostyrene, etc.); acrylonitrile; methacrylonitrile; acrylamides (e.g., acrylamide, methacrylamide, N-butyl acrylamide, etc.); unsaturated ketones (e.g., methyl vinyl ketone, methyl isopropenyl ketone, etc.); alpha-olefins (e.g., ethylene, propylene, etc.); pyridines; vinyl esters (e.g., vinyl acetate, vinyl stearate, etc.); vinyl and vinylidene halides (e.g., the vinyl and vinylidene chlorides and bromides, etc.); and the like.

A most preferred group of elastomeric materials for use in the discontinuous phase of the present invention are those consisting essentially of 70 to 100 percent by weight of butadiene and/or isoprene and up to 30 percent by weight of one or more of the monomers selected from the group consisting of monovinylidene aromatic hydrocarbons (e.g., styrene) and unsaturated nitriles (e.g., acrylonitrile). Particularly advantageous elastomeric materials for the preparation of the graftable rubber substrates of the present invention are butadiene homopolymers or an interpolymer of 90 to 97 percent by weight butadiene and 3 to 10 percent by weight of acrylonitrile and/or styrene and/or methyl methacrylate.

The graftable rubber substrates of the present invention may contain up to about 3 percent of a cross-linking agent based on the weight of the elastomeric material forming monomer or monomers. The cross-linking agent can be any of the agents conventionally used for cross-linking acrylate rubbers and the like. Suitable examples include divinylbenzene, diallyl maleate, diallyl fumarate, diallyl adipate, allyl acrylate, allyl methacrylate, diacrylates, and dimethylacrylates of polyhydric alcohols (e.g., ethylene glycol dimethacrylate, etc.), and the like.

Methods of producing the graftable rubber substrates of the present invention are well-known in the prior art. Typically, the graftable rubber substrates are formed through an emulsion polymerization process, anionic polymerization process, or Ziegler-Nata polymerization process. Exemplary processes are described in The Kirk-Othmer Encyclopedia of Chemical Technology at Vol. 8, Pages 549-559 and Vol. 18, Pages 740-744.

The graftable rubber substrates have grafted thereto a superstrate, said superstrate being formed from a monovinylidene monomer and one or more ethylenically unsaturated monomers copolymerizable with the monovinylidene monomer wherein at least one of the ethylenically unsaturated monomers copolymerizable with the monovinylidene monomer comprises a glycidyl functionality capable of reacting with one or more of the reactive functionalities of the polyamide composition.

Monovinylidene monomers suitable for use in forming the superstrate graft to the graftable rubber substrate of the present invention are the acrylates and methacrylates of aliphatic alcohols having from 1 to 12 carbon atoms, (e.g., methylacrylate, ethylacrylate, methyl methacrylate, etc.); styrene; alpha-alkyl monovinylidene monoaromatic compounds (e.g., alpha-methylstyrene, alpha-ethylstyrene, alpha-methyl vinyl toluene, alpha-methyl dialkyl styrene, etc.); ring-substituted alkyl styrenes (e.g., ortho-, meta-, and paravinyl toluene; o-ethylstyrene; p-ethylstyrene; 2,4-dimethylstyrene; p-tertiary butyl styrene; etc.); ring-substituted halostyrenes (e.g., o-chlorostyrene, p-chlorostyrene, o-bromostyrene, 2,4-dichlorostyrene, etc.); ring-alkyl, ring-halosubstituted styrene (e.g., 2-chloro-4-methylstyrene, 2,6-dichloro-4-methylstyrene, etc.); vinyl naphthalene; vinyl anthracene; etc. The alkyl substituents generally have 1 to 4 carbon atoms and may include isopropyl and isobutyl groups. If desired, mixtures of one or more of such monovinylidene monomers may be used.

In addition to the monovinylidene monomers described above the superstrate comprises one or more ethylenically unsaturated monomers copolymerizable with the monovinylidene monomer which ethylenically unsaturated monomer(s) comprise a reactive glycidyl functionality capable of reacting with one or more of the reactive functionalities of the polyamide composition. Any ethylenically unsaturated monomer copolymerizable with the monovinylidene monomer which possesses a glycidyl functionality capable of reacting with one or more of the reactive functionalities of the polyamide compositions is suitable for use in the present invention. Preferably, said ethylenically unsaturated monomer is glycidyl methacrylate, glycidyl acrylate, allyl glycidyl ether, or mixtures thereof.

In addition to the ethylenically unsaturated monomer(s) copolymerizable with the monovinylidene monomer and possessing a glycidyl functionality, the superstrate may comprise additional ethylenically unsaturated monomers. Exemplary of other ethylenically unsaturated monomers suitable for use in the present invention are the unsaturated nitriles (e.g., acrylonitrile, methacrylonitrile, ethacrylonitrile, etc.); vinyl halides such as vinyl chloride, vinyl bromide etc.; vinylidene chloride, vinylidene bromide, etc.; vinyl esters such as vinyl acetate, vinyl propionate etc.; dialkyl maleate or fumurates such a dimethyl maleate, diethyl maleate, dibutyl maleate, and the corresponding fumurates, etc.

Usually, the superstrate grafted to the graftable rubber substrate is formed from a monomer mixture which comprises the monovinylidene monomer in an amount of from 35 to 99.9 weight percent, preferably from 45 to 99.5 weight percent, based on total weight of the monomer mixture used to form the superstrate graft to the graftable rubber substrate.

Usually, the monomer mixture comprises the ethylenically unsaturated monomer reactive glycidyl functionality in an amount of from 0.1 to 40 weight percent, beneficially from 0.5 to 20 weight percent, and preferably from 1 to 10 weight percent, based on total weight of the monomer mixture used to form the superstrate graft to the graftable rubber substrate.

Additionally, the monomer mixture may comprise additional ethylenically unsaturated monomers in an amount usually from 0 to 50 weight percent, beneficially from 5 to 40 weight percent, preferably from 10 to 40 weight percent, based on total weight of the monomer mixture used to form the superstrate graft to the graftable rubber substrate.

Methods of grafting the superstrate to the graftable rubber substrate are well-known in the prior art. Examples of known polymerization processes suitable for use in the present invention include mass, mass-solution, mass-suspension, suspension, and emulsion polymerization processes as well as other modifications and/or combinations of such processes. See, for example, U.S. Patent Nos. 3,509,237; 3,928,494; 4,221,883; 4,239,863; 4,243,765; and 4,250,271.

Typically, the graft polymerization process involves combining the graftable rubber substrate with the monomers from which the superstrate is to be formed. The monomers are then polymerized to chemically combine or graft at least a portion of the graft forming polymer on the graftable rubber substrate.

A multi-stage graft polymerization process may be used. In such a process, a portion of the superstrate is formed from a particular monomer mixture and the remainder of the superstrate is formed from a different monomer mixture. For example, the graftable rubber substrates may have a first layer of a styrene/acrylonitrile copolymer graft thereto. Then a second layer may be formed wherein the second layer comprises the reactive glycidyl functionality. Through the use of a multi-stage graft polymerization process it is possible to achieve the desirable physical properties of the compositions of the present invention with a relatively small amount of the ethylenically unsaturated monomer(s) comprising the reactive glycidyl functionality based on total amount of superstrate. This is possible because the multi-stage graft polymerization process allows for the concentration of said ethylenically unsaturated monomer in the outermost layer of superstrate. In such a position, said ethylenically unsaturated monomer can more easily react with one or more of the reactive functionalities of the polyamide composition.

In many instances the process used to graft the superstrate onto the graftable rubber substrate inherently produces an amount of free superstrate polymer, that is, an amount of superstrate polymer which is not grafted to the graftable rubber substrate. It is to be understood that free superstrate polymer may be incorporated into the polymeric compositions of the present invention through the above process or by blending of separately prepared polymer. Generally, the amount of free superstrate present in the polymeric compositions of the present invention is within the range of from 0 to 40 weight percent based on total polymeric composition weight.

The graftable rubber substrate having superstrate grafted thereto suitably have a volume average particle diameter within the range of from 300 Angstroms (30 nm) to 25,000 Angstroms (2.5 μm). Preferably, the particles have a diameter within the range of from 800 Angstroms (80 nm) to 20,000 Angstroms (2 μm).

The graftable rubber substrate usually has grafted thereto an amount of superstrate such that the ratio of the weight of chemically attached superstrate (graft) to weight of graftable rubber substrate (rubber) is within the range of from 0.01:1 to 5.0:1 (graft to rubber ratio), beneficially from 0.05:1 to 3.0:1. Preferably, the graft to rubber ratio is from 0.1:1 to 1.0:1.

Applicants have discovered that, by employing an ethylenically unsaturated monomer comprising a glycidyl functionality capable of reacting with one or more of the reactive functionalities of the polyamide composition, they can produce polymeric compositions possessing improved physical properties when compared to either the polyamide composition itself or to polymeric compositions comprising a polyamide resin and a discontinuous phase comprising a superstrate of an ethylenically unsaturated monomer that is not capable of reacting with one or more of the functionalities of the polyamide composition.

The discontinuous phase of the present invention can be dispersed in the continuous phase of the present invention through methods well-known in the prior art. Typically, the discontinuous phase will be melt blended with the continuous phase under conditions sufficient to cause a reaction between the reactive glycidyl functionality present on the ethylenically unsaturated monomer and one or more of the reactive functionalities of the polyamide composition. Examples of methods suitable for dispersing the discontinuous phase in the continuous phase are melt blending in a banbury mixer, a brabender mixer, a single screw extruder, a twin screw extruder, and the like.

Applicants have discovered that in some instances better physical properties are obtained with a two stage blending/reacting process. In such a process, a portion of the discontinuous phase is blended with the continuous phase, or portion thereof, under conditions sufficient to react one or more of the reactive functionalities of the continuous phase with the reactive glycidyl functionality of the discon tinuous phase. Then, the remaining portion of the discontinuous phase is blended with the previously blended continuous/discontinuous phase and any remaining continuous phase.

Applicants believe, but do not intend to be limited thereby, that such a two stage blending/reacting process allows more of the reactive functionalities of the polyamide to react with the reactive glycidyl functionalities and lowers the number of reactive polyamide functionalities reacting with reactive polyamide functionalities and reactive glycidyl functionalities reacting with reactive glycidyl functionalities. In some instances it may be desirable to use a three or more stage blending/reacting process.

An amount of discontinuous phase is dispersed in the continuous phase so that the resultant polymeric composition comprises from 1 to 45, preferably 10 to 45, weight percent of the discontinuous phase. Preferably, an amount of discontinuous phase is dispersed in the continuous phase so that the resultant polymeric composition comprises from 5 to 30, especially 10 to 20, weight percent of the graftable rubber substrate. When relatively low levels of graftable rubber substrate are present with relatively high levels of grafted and non-grafted superstrate, the discontinuous phase will be grafted and non-grafted superstrate with graftable rubber substrate dispersed therein.

In some applications, it may be desirable to employ a discontinuous phase wherein the discontinuous phase comprises graftable rubber substrates having a superstrate grafted thereto (grafted substrates) which graftable rubber substrates have a broad particle diameter range or which comprise two or more distinct groups having different average particle diameters. For example, it is sometimes desirable to employ a discontinuous phase formed from a first group of graftable rubber substrates having an average particle diameter within the range of from 800 Angstroms (80 nm) to 2000 (200 nm) Angstroms and a second group of graftable rubber substrates having an average particle diameter within the range of from 4000 (40 nm) Angstroms to 20,000 (2 μm) Angstroms.

The following Examples are presented to further illustrate but not limit the scope of this invention. All parts and percentages are by weight unless otherwise indicated. 10 Angstroms are 1 nm, 10,000 Angstroms are 1 μm, and 1 gallon is 3.8 liters. Due to rounding and experimental error, the given percentages may not always equal exactly 100 percent.

Examples

All of the Examples described below employ graftable rubber substrates having superstrate graft thereto. For ease of explanation the graftable rubber substrates having superstrate grafted thereto are referred to as grafted rubber concentrates (GRC). The following grafted rubber concentrates are employed in the Examples.

Grafted Rubber Concentrate - 1

Into a 1-gallon glass reactor is charged 1583.6 grams of a latex of rubber particles. The latex contains 574.5 grams of rubber solids, which solids comprise 5 percent styrene, 93 percent butadiene, and 2 percent acrylonitrile. The rubber solids comprise two groups of particles, one group having an average particle diameter of about 1000 Angstroms, the second group having an average particle diameter of about 8000 Angstroms. The latex is stabilized with 0.92 percent sodium dodecylbenzene sulfonate soap.

The reactor is flushed with nitrogen and heated under agitation. When the contents of the reactor reaches about 80°C. an aqueous stream is continuously added to the reactor over a period of 6 hours at the rate of 112 grams per hour. The aqueous stream comprises 1.017 percent sodium dodecylbenzene sulfonate and 0.120 percent sodium persulfate. Simultaneously with the addition of the aqueous stream a monomer stream is added to the reactor. The monomer stream is added to the reactor over a period of about 6 hours at the rate of 116 grams per hour. The monomer stream comprises about 68.08 percent styrene, about 26.48 percent acrylonitrile, about 4.98 percent glycidyl methacrylate, and about 0.46 percent n-octyl mercaptan.

After addition of the aqueous stream and the monomer stream is completed, the contents of the reactor are maintained at a temperature of about 80°C for 1 hour. The mixture contained in the reactor is then steam stripped. After steam stripping, the contents of the reactor have added thereto 2.5 grams of alkylated polyphenols commercially available under the trade designation Topanol® CA available from Canadian Industries, and 7.6 grams dilauryl thiodipropionate. The resulting dispersion of grafted rubber concentrate contains 42.04 percent polymer solids, the polymer solids comprising 47.13 percent rubber. The grafted rubber concentrate contains about 5 percent glycidyl methacrylate in the superstrate.

Grafted Rubber Concentrate - 2

Into a 1-gallon glass reactor is charged 1583.6 grams of a latex of rubber particles. The latex contains 574.5 grams of rubber solids. The rubber solids comprise 5 percent styrene, 93 percent butadiene, and 2 percent acrylonitrile. The rubber solids comprise rubber particles having an average particle diameter of about 1262 Angstroms. The latex contained in the reactor is stabilized with 0.92 percent sodium dodecylbenzene sulfonate soap.

The reactor is flushed with nitrogen and heated under agitation. When the contents of the reactor reach about 80°C an aqueous stream is added to the reactor over a period of about 3 hours at the rate of 112 grams per hour. The aqueous stream contains 1.017 percent sodium dodecylbenzene sulfonate and 0.120 percent sodium persulfate. Simultaneously with the addition of the aqueous stream a monomer stream is added to the reactor. The monomer stream is added to the reactor over a period of about 3 hours at the rate of 116 grams per hour. The monomer stream comprises about 71.64 percent styrene, about 27.87 percent acrylonitrile, and about 0.48 percent n-octyl mercaptan. After addition of the aqueous and monomer streams is complete the contents of the reactor are heated to 80°C and maintained at that temperature for 30 minutes.

At the end of that time, a second aqueous stream is added to the reactor over about 3 hours at the rate of 112 grams per hour. The aqueous stream contains 1.017 percent sodium dodecylbenzene sulfonate and 0.120 percent sodium persulfate. Simultaneously with the addition of the second aqueous stream, a second monomer stream is added to the reactor. The second monomer stream is added to the reactor over a period of about 3 hours at the rate of 116 grams per hour. The second monomer stream comprises 68.08 percent styrene, 26.48 percent acrylonitrile, 4.98 percent glycidyl methacrylate, and 0.46 percent n-octyl mercaptan.

After addition of the second aqueous and monomer streams is complete, the contents of the reactor are maintained at about 80°C for a period of about 30 minutes. The contents of the reactor is steam stripped. After steam stripping, the contents of the reactor have added thereto about 2.5 grams of alkylated polyphenols (Topanol® CA) and 7.6 grams of dilauryl thiodipropionate. The resulting grafted rubber concentrate contains 42.13 percent polymer solids, said polymer solids comprising 47.17 percent rubber. The grafted rubber concentrate comprises about 2.5 percent glycidyl methacrylate in the superstrate.

## Grafted Rubber Concentrate - 3

A grafted rubber concentrate is prepared according to the methods used to form Grafted Rubber Concentrate-2 with the following exceptions. The starting latex of rubber particles comprises a mixture of rubber particles, one group of particles having an average particle diameter of about 1000 Angstroms, the other group of particles having an average particle diameter of about 8000 Angstroms. The polymer solids of the resulting grafted rubber concentrate comprise about 46.88 percent rubber. The grafted rubber concentrate so produced contains about 2.5 percent glycidyl methacrylate in the superstrate phase.

## Grafted Rubber Concentrate - 4

Into a 1-gallon glass reactor is charged 2092.8 grams of a latex of rubber particles. The latex contains 689.4 grams of rubber which rubber comprises 5 percent styrene, 93 percent butadiene, and 2 percent acrylonitrile. The rubber particles of the latex comprise a first group of rubber particles having an average particle diameter of about 1000 Angstroms and a second group of rubber particles having an average particle diameter of about 8000 Angstroms. The latex is stabilized with 0.92 percent sodium dodecylbenzene sulfonate soap.

The reactor is flushed with nitrogen and heated under agitation. When the reactor reaches about 80°C an aqueous stream is added to the reactor continuously over a period of about 3 hours at the rate of 134.4 grams per hour. The aqueous stream contains 1.017 percent sodium dodecylbenzene sulfonate and 0.120 percent sodium persulfate. Simultaneously with the addition of the aqueous stream a monomer stream is added to the reactor. The monomer stream is added to the reactor continuously over a period of about 3 hours at the rate of 139.2 grams per hour. The monomer stream comprises 65.94 percent styrene, 25.64 percent acrylonitrile, 7.96 percent glycidyl methacrylate, and 0.46 percent n-octyl mercaptan.

After addition of aqueous and monomer streams is complete the reactor is maintained at a temperature of 80°C for a period of about 1 hour. The mixture contained within the reactor is steamed stripped. After steam stripping the mixture contained in the reactor has added thereto 2.2 grams of alkylated polyphenols (Topanol® CA) and 6.6 grams of dilauryl thiodipropionate. The grafted rubber concentrate so produced contains about 37.96 percent polymer solids, said polymer solids comprising about 63.82 percent rubber, about 24.89 percent grafted superstrate, and about 11.29 percent nongrafted superstrate.

## Grafted Rubber Concentrate - 5

Into a 1-gallon glass reactor is charged 1661.6 grams of a latex of rubber particles. The latex contains 573.8 grams of rubber solids, which rubber solids comprise 5 percent styrene, 93 percent butadiene, and 2 percent acrylonitrile. The rubber particles of the latex comprise two groups of particles, one group of particles having an average particle diameter of about 1000 Angstroms and the other group of particles having a diameter of about 8000 Angstroms. The latex is stabilized with 0.92 percent sodium dodecylbenzene sulfonate soap.

The reactor is flushed with nitrogen and heated under agitation. When the contents of the reactor reach a temperature of about 80°C an aqueous stream is added to the reactor continuously over a period of about 4 hours at the rate of 112 grams per hour. The aqueous stream comprises 1.017 percent sodium dodecylbenzene sulfonate and 0.120 percent sodium persulfate. Simultaneously with the addition of the aqueous stream a monomer stream is added to the reactor. The monomer stream is added to the reactor continuously over a period of about 4 hours at the rate of 116 grams per hour. The monomer stream comprises about 71.64 percent styrene, about 27.87 percent acrylonitrile, and about 0.48 percent n-octyl mercaptan. After the addition of the aqueous and monomer streams is complete the contents of the reactor is maintained at a temperature of 80°C for about 30 minutes.

At that time a second aqueous stream is added to the reactor. The second aqueous stream is added to the reactor continuously over a period of about 2 hours at the rate of 112 grams per hour. The second aqueous stream comprises 1.017 percent sodium dodecylbenzene sulfonate and 0.12 percent sodium persulfate. Simultaneously with the addition of the second aqueous stream a second monomer stream is added to the reactor. The second monomer stream is added to the reactor over a period of about 2 hours at the rate of 116 grams per hour. The second monomer stream comprises about 68.08 percent styrene, about 26.48 percent acrylonitrile, about 4.98 percent glycidyl methacrylate, and about 0.46 percent n-octyl mercaptan.

After addition of the second aqueous and monomer streams is complete the contents of the reactor is maintained at a temperature of 80°C for an additional 30 minutes. The contents of the reactor are then steam stripped. After steam stripping the contents of the reactor has added thereto 2.5 grams of alkylated polyphenols (Topanol® CA) and 7.6 grams dilauryl thiodipropionate. The grafted rubber concentrate so produced contains about 40.01 percent polymer solids. The polymer solids comprise about 48.35 percent rubber, about 30.94 percent grafted superstrate, and about 20.71 percent nongrafted superstrate.

## Grafted Rubber Concentrate - 6

A grafted rubber concentrate is prepared according to the method used to prepare Grafted Rubber Concentrate-5 with the following exceptions: The first aqueous and monomer streams are added to the reactor over a period of about 4.5 hours at a rate of 112 grams per hour and 116 grams per hour, respectively. The second aqueous and monomer streams are added to the reactor over a period of 1.5 hours at a rate of 112 grams per hour and 116 grams per hour respectively. The grafted rubber concentrate so produced has a rubber content of about 46.89 percent.

## Grafted Rubber Concentrate - 7

Into a 1-gallon glass reactor is charged 1258.9 grams of a rubber latex. The rubber latex comprises 445.7 grams of rubber solids, said solids comprising 5 percent styrene, 93 percent butadiene, and 2 percent acrylonitrile. The rubber solids comprise two groups of rubber particles. The first group of rubber particles have an average particle diameter of 1000 Angstroms and the second group of rubber particles has an average particle diameter of about 8000 Angstroms. The rubber latex is stabilized with 0.92 percent sodium dodecylbenzene soap.

The reactor is flushed with nitrogen and heated under agitation. When the contents of the reactor reach a temperature of about 80°C an aqueous stream is added to the reactor over a period of about 4 hours at the rate of 150.6 grams per hour. The aqueous stream comprises 1.017 percent sodium dodecylbenzene sulfonate and 0.120 percent sodium persulfate. Simultaneously with the addition of the aqueous stream a monomer stream is added to the reactor. The monomer stream is added to the reactor over a period of about 4 hours at the rate of 156.0 grams per hour. The monomer stream comprises about 71.64 percent styrene, about 27.87 percent acrylonitrile, and about 0.48 percent n-octyl mercaptan. After addition of the first aqueous and monomer streams is complete the reactor is maintained at a temperature of about 80°C for an additional 30 minutes.

At that time, a second aqueous stream is added to the reactor over a period of about 2 hours at the rate of 150.6 grams per hour. The aqueous stream comprises 1.017 percent sodium dodecylbenzene sulfonate and 0.12 percent sodium persulfate. Simultaneously with the addition of the second aqueous stream a second monomer stream is added to the reactor. The second monomer stream is added to the reactor over a period of about 2 hours at the rate of 156.0 grams per hour. The second monomer stream comprises about 68.08 percent styrene, about 26.48 percent acrylonitrile, about 4.98 percent glycidyl methacrylate, and about 0.46 percent n-octyl mercaptan.

After addition of the second aqueous and monomer streams is complete the contents of the reactor are maintained at about 80°C for an additional 30 minutes. The contents of the reactor are then steam stripped. After steam stripping the contents of the reactor have added thereto 2.8 grams of alkylated polyphenols (Topanol® CA) and 8.3 grams dilauryl thiodipropionate. The grafted rubber concentrate so produced comprises about 43.54 percent polymer solids, the polymer solids comprising about 33.57 percent rubber, about 31.22 percent grafted superstrate, and about 35.21 percent nongrafted superstrate.

Grafted Rubber Concentrate-8

A grafted rubber concentrate is prepared according to the method used to prepare Grafted Rubber Concentrate-2 with the following exceptions. The rubber solids comprise rubber particles having an average particle diameter of about 1723 Angstroms. The polymer solids of the resulting grafted rubber concentrate comprise about 47.05 percent rubber.

Grafted Rubber Concentrate-9

A grafted rubber concentrate is prepared according to the method used to prepare Grafted Rubber Concentrate-1 with the following exceptions. The rubber solids comprise rubber particles having an average particle diameter of about 952 Angstroms. The polymer solids of the resulting grafted rubber concentrate comprise about 47.71 percent rubber.

Grafted Rubber Concentrate-10

A grafted rubber concentrate is prepared according to the method used to prepare Grafted Rubber Concentrate-6 with the following exceptions. The first aqueous and monomer streams are added to the reactor over a period of 5 hours and the second aqueous and monomer streams are added to the reactor over a period of 1 hour. The grafted rubber concentrate so produced has a rubber content of about 47.61 percent.

Grafted Rubber Concentrate-11

A grafted rubber concentrate is prepared according to the method used to prepared Grafted Rubber Concentrate-4 with the following exceptions. The monomer stream comprises 68.08 percent styrene; 26.48 percent acrylonitrile; 4.98 percent glycidyl methacrylate, and 0.46 percent n-octyl mercaptan.The grafted rubber concentrate so produced has a rubber content of about 65.54 percent.

Grafted Rubber Concentrate-12

A grafted rubber concentrate is prepared according to the method used to prepare Grafted Rubber Concentrate-1 with the following exceptions. The monomer stream comprises 69.87 percent styrene, 27.17 percent acrylonitrile, 2.49 percent glycidyl methacrylate, and 0.46 percent n-octyl mercaptan. The grafted rubber concentrate so produced has a rubber content of about 46.27 percent.

Grafted Rubber Concentrate-13

A grafted rubber concentrate is prepared according to the method used to prepare Grafted Rubber Concentrate-1 with the following exceptions. The monomer stream comprises 70.23 percent styrene; 27.32 percent acrylonitrile; 1.99 percent glycidyl methacrylate and 0.46 percent n-octyl mercaptan. The grafted rubber concentrate so produced has a rubber content of about 47.21 percent.

A summary of the various grafted rubber concentrates prepared as described above appears in Table I.

## TABLE I

| GRC #[1] | Composition of[2] Superstrate | Percent[3] GMA | Particle Size[4] | Percent[5] Rubber |
|---|---|---|---|---|
| 1 | (S/AN/GMA) | 5.0 | 1000/8000 | 47.13 |
| 2* | (S/AN)(S/AN/GMA) 1:1 | 2.5 | 1262 | 47.17 |
| 3* | (S/AN)(S/AN/GMA) 1:1 | 2.5 | 1000/8000 | 46.88 |
| 4 | (S/AN/GMA) | 8.0 | 1000/8000 | 63.82 |
| 5* | (S/AN)(S/AN/GMA) 2:1 | 1.67 | 1000/8000 | 48.35 |
| 6* | (S/AN)(S/AN/GMA) | 1.25 | 1000/8000 | 46.89 |
| 7* | (S/AN)(S/AN/GMA) 2:1 | 1.67 | 1000/8000 | 33.57 |
| 8* | (S/AN)(S/AN/GMA) 1:1 | 2.5 | 1723 | 47.05 |
| 9 | (S/AN/GMA) | 5.0 | 952 | 47.71 |
| 10* | (S/AN)(S/AN/GMA) | 0.83 | 1000/8000 | 47.61 |
| 11 | (S/AN/GMA) | 5.0 | 1000/8000 | 65.54 |
| 12 | (S/AN/GMA) | 2.5 | 1000/8000 | 46.27 |
| 13 | (S/AN/GMA) | 2.0 | 1000/8000 | 47.21 |

[1] GRC = Grafted Rubber Concentrate Number.
[2] S = Styrene; AN = Acrylonitrile: GMA = Glycidyl Methacrylate.
[3] Percent Glycidyl Methacrylate present in superstrate as a function of total superstrate polymers.
[4] Particle size in Angstoms ($10^{-1}$ nm) of graftable rubber substrates.
[5] Rubber content (as a percent) of the GRC.

* Two stage graft polymerization; first stage S/AN only, second stage S/AN/GMA. Ratio indicates approximate ratio of amount of first stage graft to amount of second stage graft.

Preparation of Compositions According to the Present Invention

The grafted rubber concentrates produced as described above are freeze coagulated, separated, and air dried. The grafted rubber concentrate so recovered represents the discontinuous phase of the compositions according to the present invention. The blends formed comprise a continuous phase of either polycaprolactam (nylon 6), polyhexamethylene adipamide (nylon 66), Zytel™ 330 commercially available from DuPont deNemours, E. I. &'Co. an amorphous nylon believed to be a polyhexamethylene tere-co-isophthalamide (nylon 6TA/IA), and mixtures or interpolymers thereof.

The compositions of the present invention are prepared by first dry blending the continuous phase and the discontinuous phase. The resultant dry blended composition is then melt blended by extrusion through a 0.8 inch (2 cm) Welding Engineers twin screw extruder. The extruder has 6 temperature zones. The composition of the continuous phase and the temperature range employed in the extrude are as follows:

| Continuous Phase | Temperature Range |
|---|---|
| 1. Polycaprolactam (Nylon 6) | 215-275°C |
| 2. Polyhexamethylene adipamide (Nylon 66) | 244-287°C |
| 3. Copolymer of caprolactam and hexamethylene adipamide | 215-275°C |
| 4. Polyhexamethylene tere-co-isophthalamide (Nylon 6TA/IA) (ZytelTM 330) | 215-287°C |
| 5. Blend of polycaprolactam and polyhexamethylene adipamide | 220-285°C |
| 6. Blend of polycaprolactam and polyhexamethylene tere-co-isophthalamide | 220-285°C |

The compositions according to the present invention are extruded through a strand die and chopped into pellets. The resultant pellets are then dried and injection molded into test bars. The test bars are sealed in polyethylene bags to protect them from moisture. Various physical property tests are performed on the test bars so prepared. The results of the physical testing as well as the exact composition of the various test bars are set forth in Table II.

## TABLE II

### Composition

| Example No.[8] | Nylon 6[1] | Nylon 662 | Nylon 6TA/IA[3] | Percent Copolymer of Caprolactam and Hexamethylene Adipamide | Percent GRC | GRC No.[4] | Percent GMA[5] | Percent Rubber[6] | Notched Izod[7] 73°F | Notched Izod[7] -20°F |
|---|---|---|---|---|---|---|---|---|---|---|
| 1 | 89 | - | - | - | 11 | 1 | 5.0 | 5 | 1.3 | 0.5 |
| 2 | 79 | - | - | - | 21 | 1 | 5.0 | 10 | 4.7 | 1. |
| 3 | 68 | - | - | - | 32 | 1 | 5.0 | 15 | 19.3 | 3. |
| 4 | 58 | - | - | - | 42 | 1 | 5.0 | 20 | 13.5 | 1. |
| 5 | 68 | - | - | - | 32 | 2 | 2.5 | 15 | 15.7 | * |
| 6 | 77 | - | - | - | 23 | 4 | 8.0 | 15 | 10.3 | * |
| 7 | 69 | - | - | - | 31 | 5 | 1.67 | 15 | 19.8 | * |
| 8 | 59 | - | - | - | 41 | 5 | 1.67 | 20 | 18.7 | * |
| 9 | 68 | - | - | - | 32 | 6 | 1.25 | 15 | 19.4 | 0. |
| 10 | 55 | - | - | - | 45 | 7 | 1.67 | 15 | 18.4 | 0. |
| 11 | - | 68 | - | - | 32 | 3 | 2.5 | 15 | 2.3 | * |
| 12 | - | 58 | - | - | 42 | 2 | 2.5 | 20 | 2.7 | * |
| 13 | - | 58 | - | - | 42 | 8 | 2.5 | 20 | 6.8 | |
| 14 | 43 | 25 | - | - | 32 | 3 | 2.5 | 15 | 19.4 | 2. |
| 15 | 34 | 34 | - | - | 32 | 3 | 2.5 | 15 | 18.7 | 1. |
| 16 | 25 | 43 | - | - | 32 | 3 | 2.5 | 15 | 18.0 | 1. |
| 17 | 69 | - | - | - | 31 | 9 | 5.0 | 15 | 4.7 | 1. |

0.260 035

## TABLE II (continued)

### Composition

| Example No.[8] | Nylon 6[1] | Nylon 662[2] | Nylon 6TA/IA[3] | Percent Copolymer of Caprolactam and Hexamethylene Adipamide | Percent GRC | GRC No.[4] | Percent GMA[5] | Percent Rubber[6] | Notched Izod[7] 73°F | -20°F |
|---|---|---|---|---|---|---|---|---|---|---|
| 18 | 68 | - | - | - | 32 | 10 | 0.83 | 15 | 1.4 | * |
| 19 | 77 | - | - | - | 23 | 11 | 5.0 | 15 | 13.4 | |
| 20 | 68 | - | - | - | 32 | 12 | 2.5 | 15 | 20.3 | 1. |
| 21 | 68 | - | - | - | 32 | 13 | 2.0 | 15 | 10.6 | * |
| 22 | - | - | 77 | - | 23 | 4 | 8.0 | 15 | 14.0 | 4. |
| 23 | - | - | 68 | - | 32 | 3 | 2.5 | 15 | 14.2 | 5. |
| 24 | 25 | - | 43 | - | 32 | 3 | 2.5 | 15 | 17.7 | 3. |
| 25 | - | - | - | 68 | 32 | 3 | 2.5 | 15 | 21.9 | * |
| C1 | 100 | - | - | - | 0 | - | 0 | 0 | 0.4 | - |
| C2 | 65 | - | - | - | 35 | 1A | 0 | 20 | 0.5 | 0.4 |
| C3 | - | 100 | - | - | 0 | - | 0 | 0 | 0.5 | - |
| C4 | - | 57 | - | - | 43 | 1A | 0 | 20 | 0.5 | - |

\* Not measured

[1] Percent Polycaprolactam

[2] Percent Polyhexamethylene Adipamide

[3] Percent Polyhexamethylene Tere-co-isophthalamide (Zytel[TM] 330)

[4] Grafted Rubber Concentrate produced as described herein under the corresponding method number.

[5] Percent Glycidyl methacrylate in the superstrate of the GRC.

[6] Percent graftable rubber substrate in total composition.

[7] In foot-pound per inch of notch according to American Society of Testing (1 foot-pound per inch = 0.53 J per cm) and materials test method D-256 (10 mil (0.25 mm) notch).

[8] Examples C2 and C4 were conducted using a grafted rubber concentrate similar to that of Example 1 but containing no glycidyl methacrylate.

As can be seen from the above table, compositions according to the present invention possess very desirable physical properties.

**Claims**

1. A polymeric composition comprising:

(1) a major proportion of a continuous phase comprising a polyamide composition, said polyamide composition comprising one or more reactive functionalities; and

(2) a minor proportion of a discontinuous phase dispersed in said continuous phase, said discontinuous phase comprising a graftable rubber substrate having grafted thereto a superstrate formed from a monovinylidene monomer and one or more ethylenically unsaturated monomers copolymerizable with the monovinylidene monomer, wherein at least one of said ethylenically unsaturated monomers comprises a reactive glycidyl functionality capable of reacting with one or more of the reactive functionalities of the polyamide composition and said discontinuous phase is present in an amount of up to 45 percent by weight of the combined weight of continuous and discontinuous phases.

2. A polymeric composition as claimed in Claim 1, wherein the discontinuous phase is present in an amount of 10 to 45 percent by weight of said combined weight.

3. A polymeric composition as claimed in Claim 1 or 2, wherein the graftable rubber substrate is selected from diene rubbers, acrylate rubbers, ethylene-propylene-diene (EPDM) rubbers, and mixtures thereof.

4. A polymeric composition as claimed in any one of the preceding claims, wherein the monovinylidene monomer is selected from styrene, alpha-methylstyrene, methyl methacrylate, and mixtures thereof.

5. A polymeric composition as claimed in any one of the preceding claims, wherein said ethylenically unsaturated monomer comprising a reactive glycidyl functionality is selected from glycidyl acrylate, allyl glycidyl ether, glycidyl methacrylate, and mixtures thereof.

6. A polymeric composition as claimed in Claim 5, wherein said ethylenically unsaturated monomer is glycidyl methacrylate.

7. A polymeric composition as claimed in any one of the preceding claims, wherein the graftable rubber substrate is present in an amount of 5 to 30 weight percent of the composition.

8. A polymeric composition as claimed in Claim 7, wherein the said amount of graftable rubber substrate is 10 to 20 percent of the composition.

9. A polymeric composition as claimed in any one of the preceding claims, wherein the superstrate is grafted to the substrate in two or more stages whereby the ethylenically unsaturated monomer having a reactive glycidyl functionality is concentrated in the outermost layer of the superstrate.

10. A polymeric composition as claimed in any one of the preceding claims, wherein the superstrate is formed from a monomer mixture comprising styrene in an amount of from 99.5 to 45 weight percent and glycidyl methacrylate in an amount of from 0.5 to 20 weight percent based on total monomer mixture weight.

11. A polymeric composition as claimed in Claim 10, wherein said monomer mixture comprises styrene in an amount of from 45 to 99.5 weight percent, acrylonitrile in an amount of from 5 to 40 weight percent, and glycidyl methacrylate in an amount of from 0.1 to 40 weight percent based on total monomer mixture weight.

12. A method of forming a polymeric composition, the steps of the method comprising:

(1) providing a continuous phase, said continuous phase comprising a polyamide composition, said polyamide composition comprising one or more reactive functionalities;

(2) providing a discontinuous phase comprising a graftable rubber substrate having grafted thereto a superstrate formed from a monovinylidene monomer and one or more ethylenically unsaturated monomers copolymerizable with the monovinylidene monomer wherein at least one of said ethylenically unsaturated monomers comprises a reactive glycidyl functionality capable of reacting with one or more of the reactive functionalities of the polyamide composition; and

(3) dispersing said discontinuous phase in said continuous phase in an amount of up to 45 percent by weight of the combined weight of continuous and discontinuous phases.

13. A method as claimed in Claim 12, wherein the discontinuous phase is as defined in any one of Claims 2 to 11.

14. A method as claimed in Claim 12 or 13, wherein at least a portion of the continuous is blended with a portion of the discontinuous phase under conditions sufficient to react one or more of the reactive functionalities of the continuous phase with the glycidyl function of the discontinuous phase and subsequently blending/reacting in one or more stages the remainder of the discontinuous phase and any remainder of the continuous phase with the previously blended phases.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | WO-A-8 604 076 (COPOLYMER RUBBER AND CHEMICAL CORP.) <br> * Page 18, lines 17-26 * <br> --- | 1-17 | C 08 L 77/00 // <br> C 08 L 51/04 <br> C 08 L 51/06 |
| Y | EP-A-0 043 491 (BAYER) <br> * Claims * <br> --- | 1-17 | |
| Y | EP-A-0 068 132 (BASF) <br> * Claims * <br> --- | 1-17 | |
| Y | EP-A-0 027 198 (BAYER) <br> * Claims * <br> --- | 1-17 | |
| Y | CHEMICAL ABSTRACTS, vol. 91, no. 14, 1979, pages 35,36, abstract no. 108705b, Columbus, Ohio, US; & JP-A-79 65 758 (TOYOBO CO., LTD) 26-05-1979 <br> ----- | 1-17 | |

TECHNICAL FIELDS
SEARCHED (Int. Cl.4)

C 08 L

The present search report has been drawn up for all claims

| Place of search | Date of completion of the search | Examiner |
|---|---|---|
| THE HAGUE | 04-12-1987 | LEROY ALAIN |

EPO FORM 1503 03.82 (P0401)